# EUROPEAN PATENT SPECIFICATION

(11) **EP 0 788 306 B1**
(45) Date of publication and mention of the grant of the patent: **31.01.2001**
(21) Application number: 95936799.6
(22) Date of filing: 27.10.1995
(51) Int. Cl.: A01N 27/00, A01N 35/02, A01N 37/02, A01N 31/04

(54) **METHOD AND MEANS FOR CONTROLLING INSECT SPECIES**
VERFAHREN UND MITTEL ZUR BEKÄMPFUNG VON INSEKTENARTEN
PROCEDE ET MOYENS POUR LA LUTTE CONTRE LES ESPECES D'INSECTES

(30) Priority: 28.10.1994 NO 944131
(43) Date of publication of application: 13.08.1997
(73) Proprietor: NORSK HYDRO A/S, 0240 Oslo 2 (NO)
(72) Inventor: BAIRD, Mark, S., Gwynedd LL57 2UW (GB); PORT, Gordon, Northumberland NE43 7QE (GB); SIMPSON, Michael, J., Leeds LS15 8LS (GB); NYMAN, Susan, Essex CM5 9EU (GB); AL'DULAYYMI, Juma'a, R., Bangor Gwynedd LL57 2AS (GB)
(74) Representative: Allam, Peter Clerk
(86) International application number: NO9500198
(87) International publication number: WO9613162

(56) References cited:
- EP-A- 0 159 137
- STN INTERNATIONAL, File Scisearch, Scisearch Accession No. 95:444523, SALAUN J. et al., "Biologically-Active Cyclopropanes and Cyclopropenes"; & CURRENT MEDICINAL CHEMISTRY, (Jun. 1995), Vol. 2, No. 1, pp. 511-542.
- STN INTERNATIONAL, File Scisearch, Scisearch Accession No. 95:166282, ANDO T. et al., "Cyclopropene Fatty Acid and Amide - Inhibitors of the Pheromone Biosynthesis in Bombyx-Mori"; & JOURNAL OF PESTICIDE SCIENCE, (1995), Vol. 20, No. 1, pp. 25-32.
- INSECT BIOCHEM. MOLEC. BIOL., Volume 22, No. 7, 1992, L. GOSALBO et al., "Inhibition of Sex Pheromone Biosynthesis in Spodoptera Littoralis by Cyclopropene Fatty Acids", pages 687-690.
- STN INTERNATIONAL, File Scisearch, Scisearch Accession No. 94:466671, GOSALBO L. et al., "Inhibitory Effect of 10,11-Methylenetetradec-10-Enoic Acid on a Z9-Desaturase in the Sex-Pheromone Biosynthesis of Spodoptera-Littoralis"; & ARCHIVES OF INSECT BIOCHEMISTRY AND PHYSIOLOGY, (1994), Vol. 26, No. 4, pp. 279-286.
- STN INTERNATIONAL, File Scisearch, Scisearch Accession No. 93:741863, GOSALBO L. et al., "Synthesis of Deuterated Cyclopropene Fatty Esters Structurally Related to Palmitic and Myristic Acids"; & LIPIDS, (Dec. 1993), Vol. 28, No. 12, pp. 1125-1130.
- JOURNAL OF ECONOMIC ENTOMOLOGY, Volume 60, February 1967, MORTON BEROZA et al., "Chemosterilant Activity of Oils, Especially Oil of Sterculia Foetida, in the House Fly", pages 196-199.
- TETRAHEDRON LETTERS, Volume 33, No. 11, 1992, MARK S. BAIRD et al., "A New Approach to Cyclopropene Fatty Acids", pages 1521-1522.
- STN INTERNATIONAL, File Scisearch, Scisearch Accession No. 93:16754, ARSEQUELL G. et al., "Synthesis of Inhibitors of a Delta-11 Desaturase in the Moth Spodoptera-Littoralis"; & CHEMISTRY AND PHYSICS OF LIPIDS, (Nov. 1992), Vol. 63, No. 1-2, pp. 149-158.
- CROP PROTECTION, Volume 3, No. 4, 1984, K.R. ALBANS et al., "Inhibition of Response of Heliothis Virescens to its Natural Pheromone by Antipheromones", pages 501-506.

## Description

The present invention relates to analogues of pheromones and their use for controlling courtship behaviour of insect species. The invention also relates to a method for controlling the courtship behaviour of insect species by using a analogue of the natural pheromone of the insect.

The use of conventional insecticides for controlling insect species is becoming a growing concern world wide. The reasons for this are costs, natural and genetic resistance and environmental factors. As a consequence there is public pressure to reduce the quantity of insecticides used.

Semiochemicals are 'signalling chemicals' which are responsible for highly effective communication systems between and within the plant and animal kingdoms. These semiochemicals can be subdivided into two main groups, pheromones and alleochemicals. An alleochemical is a substance released by an individual causing a behavioural or physiological response by an individual of a different species. A pheromone is a substance released by an individual causing a behavioural or physiological response by an individual of the same species. Pheromones play an important role in animal behaviour and because of their particular significance in affecting reproductive behaviour of insects, there has been considerable interest in using pheromones for pest management. Research has concentrated on use of the pheromone itself or analogues of the pheromone which stimulate the same type of behavioural response in the target species. Pheromones may be subdivided into groups such as sex pheromones, aggregation pheromones and alarm pheromones. Sex pheromones are usually sent from the females to attract the males, and are involved in increasing the probability of courtship or mating. They may either act over a short range as aphrodisiacs or over a long distance causing attraction. Many pheromones are long chain aliphatic compounds with one or two carbon-carbon double bonds. Alcohol, aldehyde or acetate is usually a terminal functional group.

Several methods for disrupting or inhibiting the mating of insects and crop pests are known From US-A-4,291,051 the use of 1,5-dimethyl-6,7-dioxabicyclo (3.2.1)octane, which is an analogue of pine beetle natural pheromone, for controlling infestation by pine beetles is known. 1,5-Dimethyl-6,7-dioxabicyclo (3.2.1)octane is a pheromone analogue which disrupts the natural pheromone (frontalin) activity of pine beetles. It functions (1) as an aggregation pheromone in a manner similar to that of frontalin and (2) binds to the frontalin receptor sites of the insects and thereby blocks the sites. 1,5-Dimethyl-6,7-dioxabicyclo (3.2.1)octane is somewhat unstable and as it slowly diffuses away from the release site in the target area, it slowly rearranges to frontalin.

It is well established that the naturally occurring cyclopropene fatty acid sterculic acid (A) or its esters inhibit the enzyme Δ⁹- desaturase which converts stearic acids into oleic acid (B), A. C. Fogerty et al., Lipids, vol. 4, 1969, pp. 265 and R. Jeffcoat et al., Lipids, vol. 12. 1977, pp. 480.

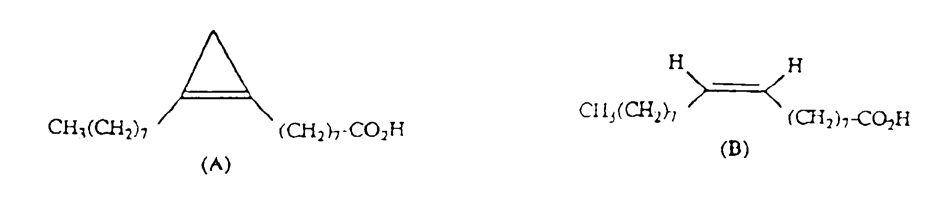

Compound (A) is identical to (B) except that a Z-alkene group has been replaced structurally by a cyclopropene group. It is also well established that diets containing sterculic acid can alter the development of a number of animal species. Thus, M. Benzoa et al.. J. Econ. Entomal., 1967, pp. 196, show that on feeding the housefly *Musca domestica* with a diet containing 2.5% sterculic foctida oil, the females produced no eggs. The reason that the cyclopropene group-containing compound is an effective inhibitor may be that it is close in structure to the product of enzyme action and therefore fit into the enzyme site, but is much more reactive than the product.

L. Gosalbo et al., Insec Biochem.Molec.Biol. Vol.22, No. 7, pp. 687-690, 1992, "Inhibition of Sex Pheromone Biosynthesis in *Spodoptera littoralis* by Cyclopropene Fatty Acids.", have also shown that treatment of females with a cyclopropene derivative inhibits the action of enzymes which are needed for changing the fatty acids to different pheromone components. Normally it is the females which send out pheromones to attract the males. The females do not produce the pheromones when they are treated with the cyclopropene compounds 10,11-methylene- hexadec-10-enoic acid and
11,12-methylenehexadec-11-enoic acid.

A. R. Jutsum et al., Crop Protection, Vol. 4, pp. 501-506, 1984, "Inhibition of response of *Heliothis virescens* to its natural pheromone by antipheromones.", describes four derivatives of pheromones which have been shown to inhibit the response of *Heliothis virescens* to its natural pheromone. This inhibition was demonstrated to be reversible and has been suggested to be based on an associative interaction between the receptor site and the carbonyl group of the antipheromone.

The main object of this invention is to arrive at a method of controlling insect species which is less detrimental to the environment than standard procedures. Another object of the invention is to arrive at a mixture of cyclopropene analogues of pheromones which comprises at least one cyclopropene analogue of a pheromone and the use of these analogues for controlling the courtship behaviour of insect species.

There have been a number of studies of cyclopropane analogues. The chemistry of the cyclopropanes in a number of cases resembles that of a carbon-carbon double bond, for example they are susceptible to electrophilic attack, although the geometry of the cyclopropane is rather different of that of the double bond.

Cyclopropane analogues of pheromones in the early studies did show an effect on the pheromone receptor. A cyclopropene in itself contains a double bond and the geometry about the carbon-carbon double bond of the cyclopropene is similar to that of a normal Z-carbon- carbon double bond. However the cyclopropene is highly strained, i.e. of high energy, and is often more reactive than a simple Z-carbon-carbon double bond in reactions with electrophiles and, in particular, nucleophiles. The three membered ring is often opened in these reactions, releasing the strain. Cyclopropene analogues of a pheromone may therefore have the right geometry to reach the receptor site, but once there may react in such a way that the receptor site is irreversibly blocked. Studies of the effect of cyclopropene analogues of pheromones where the analogue (C) is identical to the pheromone (D) except that an alkene group has been replaced by a cyclopropene group having two hydrogens at the 3-position, or where tne 3-position bears substituents other than hydrogen, have not been reported: 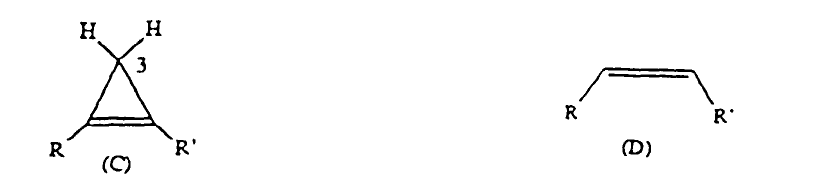 R and R' are selected such that D is a pheromone.

With these ideas in mind the inventors reasoned that an analogue of a pheromone in which a Z-carbon-carbon double bond was replaced by a cyclopropene group would 'mimic' the pheromones, block the pheromone receptor site to the insect, disrupt mating, and thus selectively control insect populations. Pheromones are either a single compound or a combination of components. If the use of these analogues is to be of practical importance, the blocking of the receptor site should ideally be irreversible or at least last long enough to cause an effect during life time of the insect. Insects that are exposed to analogues which block the receptor site, would not respond normally to each other. The mating would be disrupted and the population reduced.

In the present invention, it is proposed that a cyclopropene analogue of a pheromone may act directly at the site on the insect which recognises that pheromone and therefore the analogue may interfere with the behaviour of the insect.

Different insect species have been studied. The inventors have chosen *Musca domestica* L., the housefly as a representative of the order Diptera, or two-winged flies and *Plutella xylostella,* the diamondback moth and *Ephestia elutella,* the warehouse moth as representatives of the order Lepidoptera.

*Musca domestica* L., the housefly is a dangerous world-wide pest to animals and man because it breeds in manure, rubbish and fermenting crops. It carries and spreads typhoid, dysentery, diarrhoea, cholera, yaws, trachoma and many other diseases. It serves also as an intermediate host of roundworms and tapeworms.

*Plutella xylostella,* the diamondback moth has become one of the most destructive insects to cruciferous plants throughout the world. Few effective natural enemies of the diamondback moth exist. Broad-spectrum insecticides have been used to control diamondback moth. These may also cause destruction of natural enemies. The continual use of these insecticides has also promoted insecticide resistance. Alternative control methods are therefore urgently required for these insects.

*Ephestia elutella,* the warehouse moth is a serious pest of cocoa beans, chocolate confectionery, dried fruit and nuts. Many other substances may become infested such as tobacco. wheat or other grain stored in bulk, oilseeds, and oilseed products and manufactured animal feeding stuffs.

Because the housefly, the diamondback moth and warehouse moth are harmful against animals, crops and food stuffs, the inventors have been studying these three insects and their behaviour when treated with cyclopropene analogues of their natural sex pheromones.

The sex pheromone of the housefly is (Z)-9-tricosene (I) with trivial name muscalure. (Z)-9-Tricosene attracts the male housefly to the female over a short distance. As it approaches, the male leaps onto the female - the mating strike - and, if the female is receptive copulation will follow. Synthetic (Z)-9-tricosene may be used to increase aggregation by flies at a target location where they may be controlled by other means. The inventors have been studying a cyclopropene pheromone analogue,
1-octyl-2-tridecylcyclopropene (II), of (Z)-9-tricosene, which it was thought to be sufficiently similar in shape and physical properties to reach receptor sites.

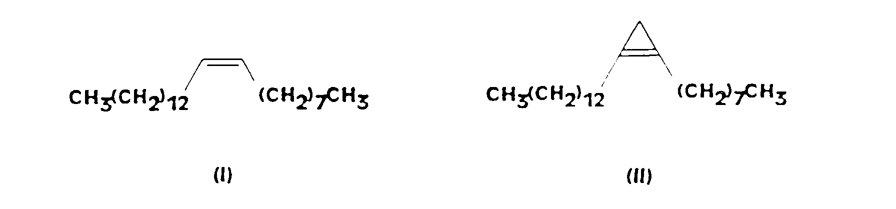

The sex pheromone for the diamondback moth consists of three components, (Z)-11-hexadecenal (III), (Z)-11-hexadecenyl acetate (IV) and (Z)-11-hexadecenyl alcohol (V), where (Z)-11-hexadecenal and (Z)-11-hexadecenyl acetate are the major components. The inventors have been studying the cyclopropene analogue,
10-(2-butylcycloprop-1-enyl)decanal (VI) and 10-(2-butylcycloprop-1-enyl)decanyl acetate (VII), of the major components. The male diamondback moth courtship behaviour, such as wing-fanning and circling, involves a complex sequence of events initiated by a 'calling female'. The 'calling female' releases a pheromone blend from a terminal abdominal gland which attracts receptive males.

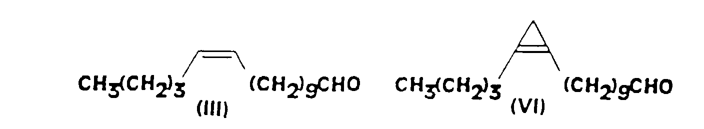

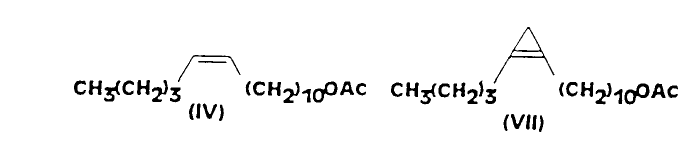

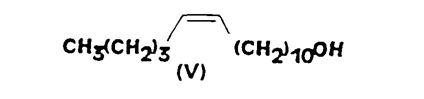

The sex pheromone of the warehouse moth consists of two components, (Z,E)-9,12-tetra-decadienyl acetate (VIII), which is the major component, and (Z,E)-9,12-tetra- decadien-1-ol (IX). The inventors have been studying the cyclopropene analogue 8-(2-(E-but-2-en-1-yl)-cycloprop-1-enyl)octan-1-yl acetate (X) and 8-(2-(E-but-2-en-1-yl)-cycloprop-1-enyl)octanol (XI) of the pheromones of the warehouse moth.

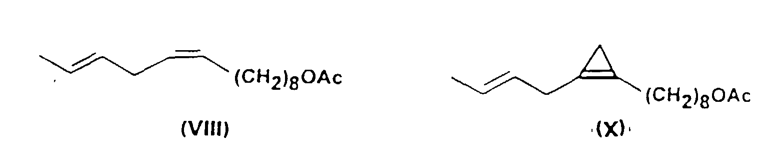

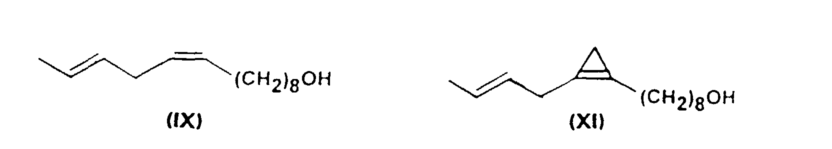

The inventors have found that the cyclopropene analogues of the pheromones have a dramatic effect on courtship behaviour of each of the three insect species. Treatment of houseflies with cyclopropene analogue, 1-octyl-2-tridecylcyclopropene (II) of (Z)-9-tricosene (I), which is the sex pheromone of the housefly, resulted in a reduced number of mating strikes. When diamondback moth and warehouse moth were treated with cyclopropene analogues of their respective sex pheromones, their courtship behaviour like wing-fanning and circling were dramatically decreased.

Thus the inventors have arrived at new analogues of pheromones which are cyclopropene analogues of a pheromone in which the analogue is identical to the pheromone except that an alkene group has been replaced by a cyclopropene group having either two hydrogens at the 3-position or one or two substituents other than hydrogen at the 3-position. In particular embodiments the invention relates to analogues of pheromones where a Z- or cis-alkene is replaced by a cyclopropene. In another aspect the invention provides a mixture of analogues of pheromones, which comprises at least one cyclopropene analogue of a pheromone according to the present invention. The invention further comprises the use of a pheromone analogue for controlling an insect species, and a method for controlling an insect species, where a pheromone analogue in which the analogue is identical to a pheromone which is recognised by the insect species except that an alkene group has been replaced by a cyclopropene having either two hydrogens at the 3-position or one or two substituents other than hydrogen at the 3-position, or a mixture of such analogues, is applied to the insect species, separately or distributed in a carrier. Particularly, the method of the invention uses an analogue of a sex pheromone to change the mating behaviour of the insect species.

The invention will be further described with reference to the accompanying drawings, in which:
- Figure 1: shows mating strikes made by male houseflies on female targets.
- Figure 2: shows mating strikes made by male houseflies on female targets.
- Figure 3: shows mating strikes made by male houseflies on female targets.
- Figure 4: shows the EAG dose-response curves of male *Plutella xylostella.*
- Figure 5: shows the amount of circling and walking.
- Figure 6: Graphs to show behavioural responses of five male *Plutella xylostella* to treatment.
- Figure 7: Graphs to show behavioural responses of five male *Plutella xylostella* to treatment.
- Figure 8: Graphs to show behavioural responses of five male *Plutella xylostella* to treatment.
- Figure 9: shows the EAG does-response curves of male *Ephestia elutella.*
- Figure 10: Graphs to show behavioural responses of five male *Ephestia elutella* to treatment.
- Figure 11: Graphs to show behavioural responses of five male *Ephestia elutella* to treatment.

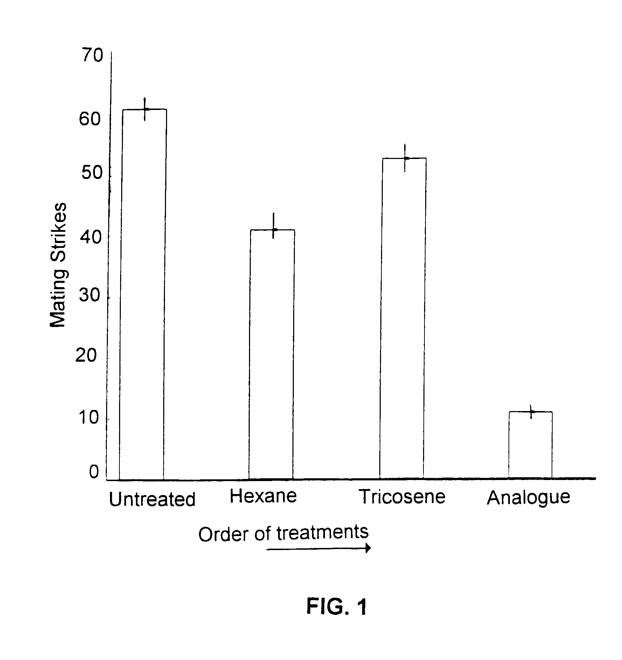

Figure 1 shows graphically the number of mating strikes made on live, three days old females before and after treatment of females with 1 µl hexane, 1 µg of (Z)-9-tricosene (I) in 1 µl hexane, or 1µg of cyclopropene analogue (II) in 1 µl hexane. Vertical bars represent the Standard Error (SE) of the mean.

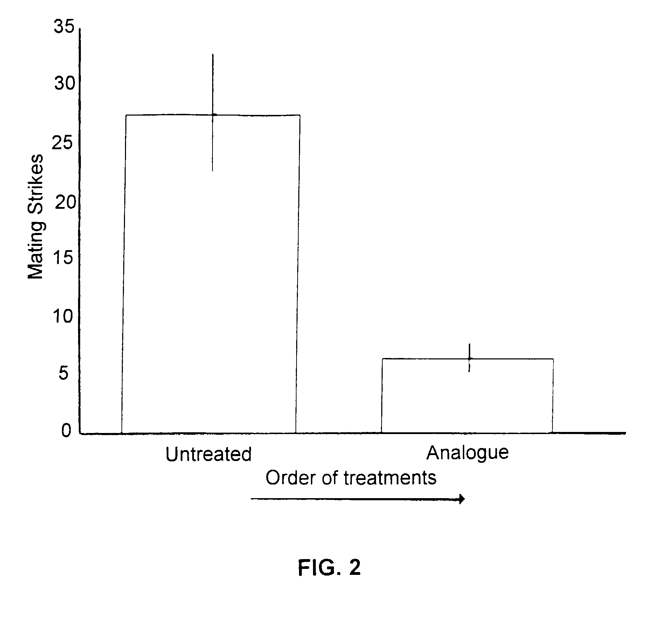

Figure 2 shows graphically the number of mating strikes made on live. three days old females before and after treatment of females with 1µg of cyclopropene analogue (II) in 1 µl hexane. Vertical bars represent the Standard Error (SE) of the mean.

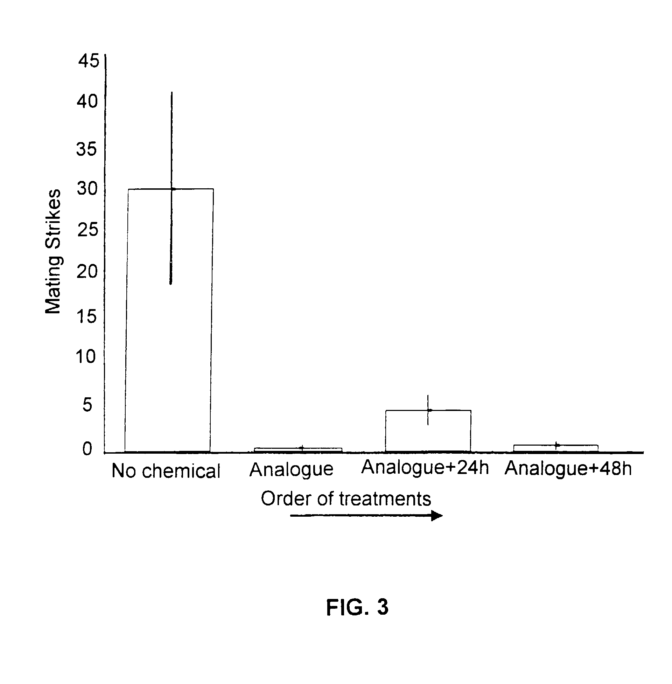

Figure 3 shows graphically the number of mating strikes made on females before and after treatment of males with 1µg of cyclopropene analogue (II) in 1 µl hexane and then retested after 24 hours and 48 hours of the treatment. Vertical bars represent the Standard Error (SE) of the mean.

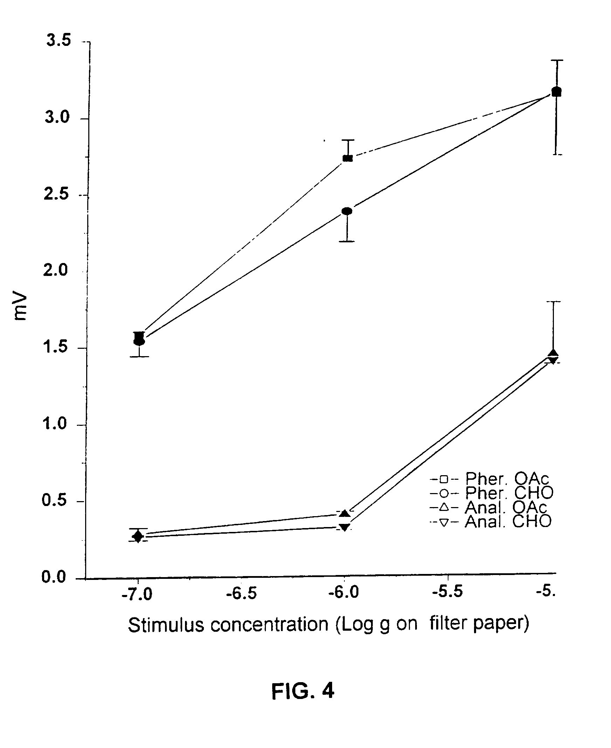

Figure 4 shows the EAG dose-response curves of male *Plutella xylostella* to (Z)-11-hexadecenal (III) and (Z)-11-hexadecenyl acetate (IV) and 10-(2-butylcycloprop-1-enyl)- decanal (VI) and 10-(2-butylcycloprop-1-enyl)decanyl acetate (VII). Vertical bars represent the Standard Error (SE) of the mean.

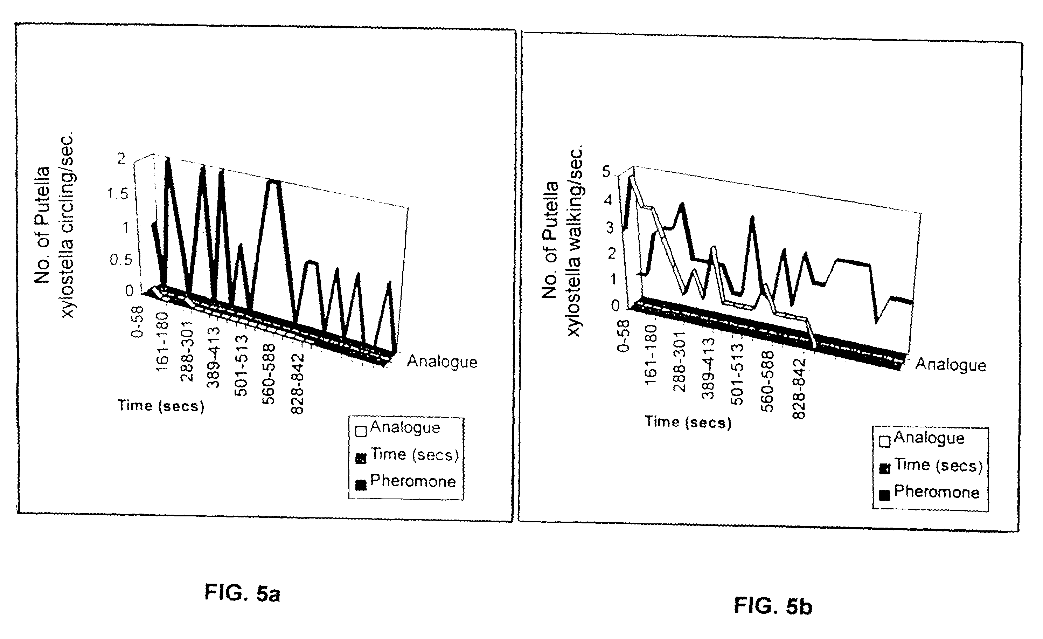

Figure 5 shows the amount of circling (5a) and walking (5b) in the arm treated with pheromone and analogue.

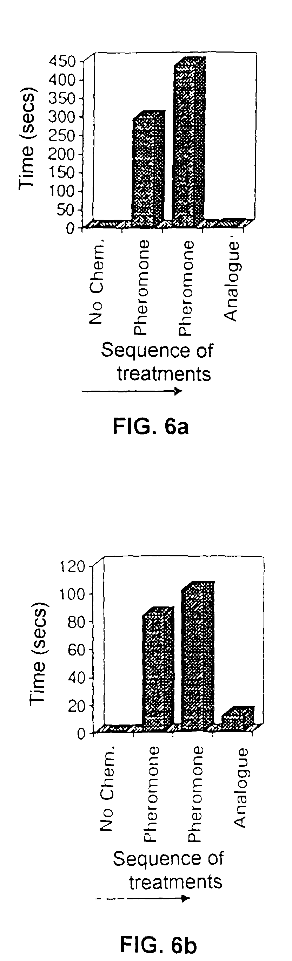

Figure 6 shows graphically circling (6a) and wing fanning (6b) responses of five male *Plutella xylostella* to treatment with no chemical, treatment with a 1:1 mixture of (Z)-11-hexadecenal (III) and (Z)-11-hexadecenyl acetate (IV) (two times), and finally treatment with a 1:1 mixture of 10-(2-butylcycloprop-1-enyl)decanal (VI) and 10-(2-butylcycloprop-1-enyl)decanyl acetate (VII).

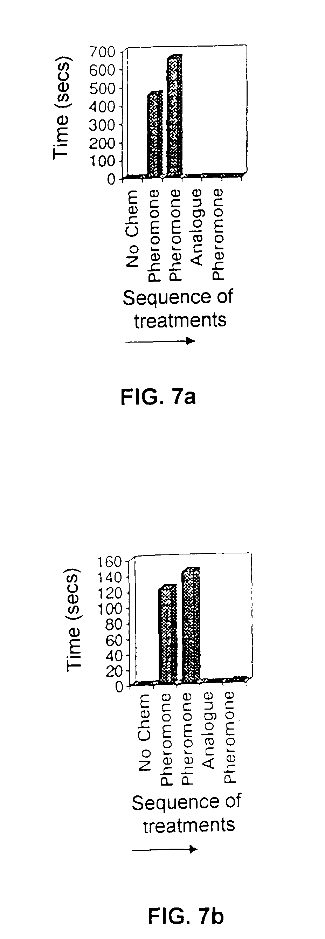

Figure 7 shows graphically circling (7a) and wing fanning (7b) responses of five male *Plutella xylostella* to treatment with no chemical, treatment with 1:1 mixture of (Z)-11-hexadecenal (III) and (Z)-11-hexadecenyl acetate (IV) (two times), treatment with 1:1 mixture of 10-(2-butyl- cycloprop-1-enyl)decanal (VI) and 10-(2-butylcycloprop-1-enyl)decanyl acetate VII), and finally a new treatment with a 1:1 mixture of (Z)-11-hexadecenal (III) and (Z)-11-hexadecenyl acetate (IV).

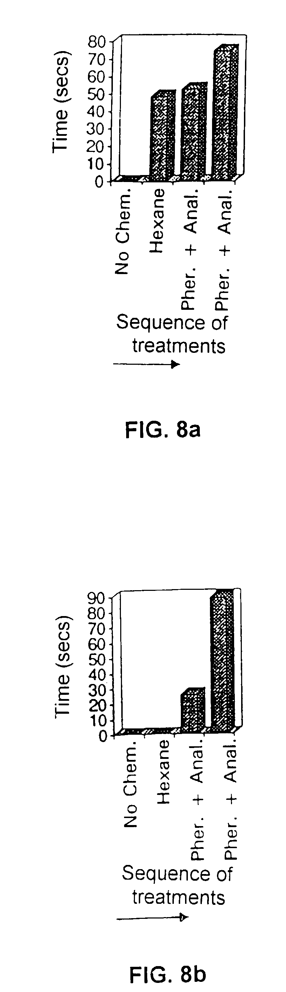

Figure 8 shows graphically circling (8a) and wing fanning (8b) responses of five male *Plutella xylostella* to treatment with no chemical, treatment with hexane and a 1:1 mixture of (Z)-11-hexadecenal (III) and (Z)-11-hexadecenyl acetate (IV), 10-(2-butylcycloprop-1-enyl)- decanal (VI) and 10-(2-butylcycloprop-1-enyl)decanyl acetate (VII).

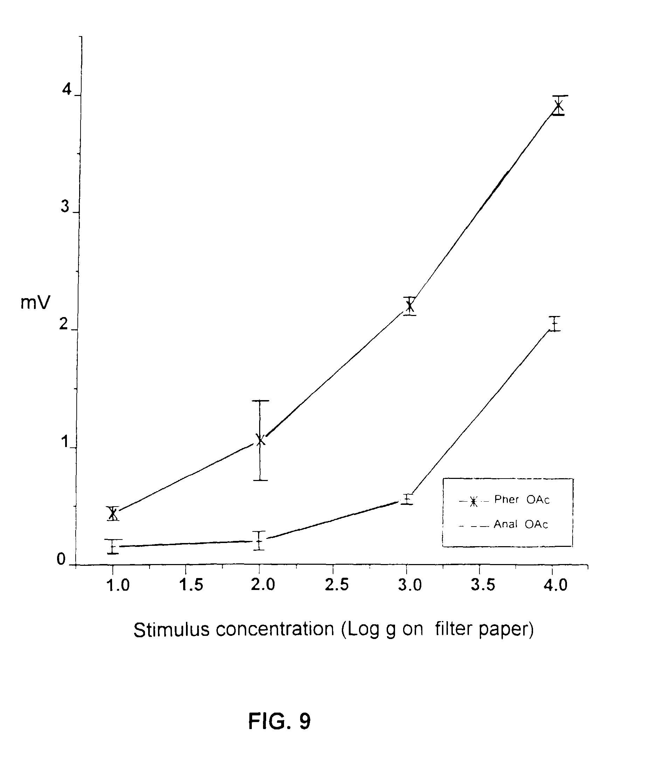

Figure 9 shows the EAG dose-response curves of male *Ephestia elutella* to (Z,E)-9,12-tetradecadienyl acetate (VIII) and 8-(2-(E-but-2-en-1-yl)-cycloprop-1-enyl)octanyl acetate (X). Vertical bars represent the Standard Error (SE) of the mean.

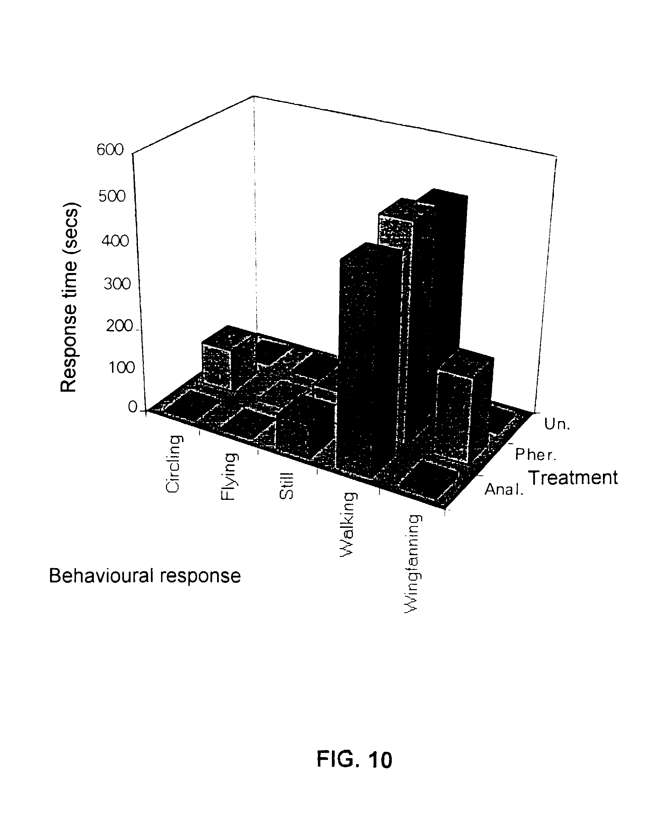

Figure 10 shows graphically behavioural responses of five male *Ephestia elutella* to treatment with no chemical, treatment with a 1:1 mixture of (Z,E)-9,12-tetradecadienyl acetate (VIII) and (Z,E)-9,12-tetradecadien-1-ol (IX), and a 1:1 mixture of 8-(2-(E-but-2-en-1-yl)-cycloprop-1-enyl)- octanyl acetate (X) and 8-(2-(E-but-2-en-1-yl)-cycloprop-1-enyl)octanol (XI).

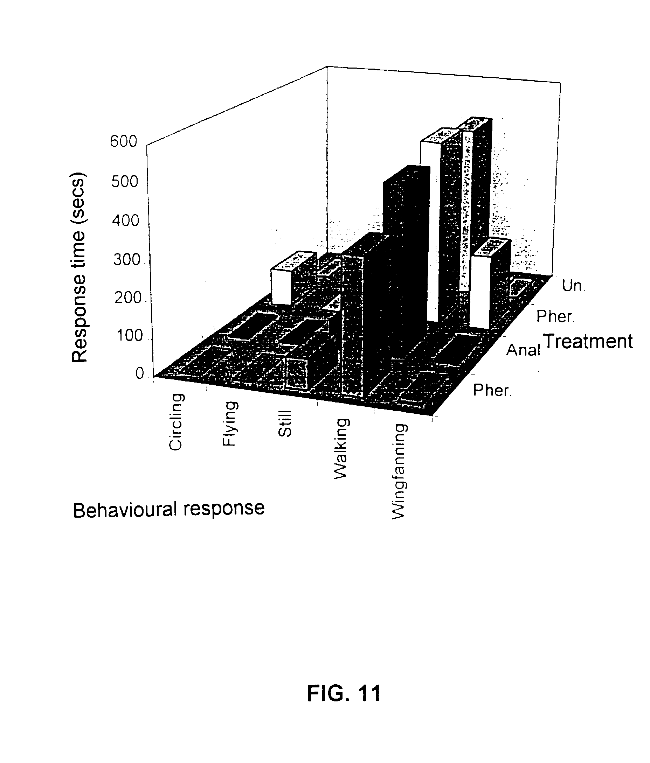

Figure 11 shows graphically responses of five male *Ephestia elutella* to treatment with no chemical, treatment with a 1:1 mixture of (Z,E)-9,12-tetradecadienyl acetate (VIII) and (Z,E)-9,12-tetradecadien-1-of (IX), a 1:1 mixture of 8-(2-(E-but-2-en-1-yl)-cycloprop-1-enyl)octanyl acetate (X) and 8-(2-(E-but-2-en-1-yl)-cycloprop-1-enyl)octanol (XI) and finally a new treatment with a 1:1 mixture of (Z,E)-9,12-tetradecadienyl acetate (VIII) and (Z,E)-9,12-tetradecadien-1-ol (IX).

### Example 1.

### Musca domestica L., the housefly.

This example shows treatment of houseflies to determine the effect of cyclopropene pheromone analogue, 1-octyl-2-tridecylcyclopropene (II) of (Z)-9-tricosene (I) on male mating strikes on different treatments and targets.

In previous studies of the pheromone the number of mating strikes observed has been taken as indicative of potency of the pheromone. The tests were conducted in a glass chamber 6 cm high and 9.5 cm in diameter divided by glass partitions into four quadrants. In the tests, targets, treated in different ways, were exposed to groups of five virgin male flies in a test chamber, the interactions were recorded on video tape for 15 minutes, and then analysed to assess the numbers of strikes observed on each target. In the series of tests live, virgin female flies of known age were used as the targets. In some cases the male flies copulated with the target, thus making it unavailable for further mating strikes. The inventors have assumed that during copulation a mating strike would have occurred every 15 seconds.

Targets were fixed to a piece of sealing wax on a glass cover slip. The targets were tested before and after treatment enabling a paired comparison between the same flies, before and after treatment. In some of the tests the female target were treated in one of three ways :
(1) With 1µl of hexane (the solvent)
(2) With 1 µl of a solution of (Z)-9-tricosene (I) in hexane (1 mg in 1 ml)
(3) With 1 µl of a solution of analogue (II) in hexane (1 mg in 1 ml)

In other tests the female targets were untreated, but the male were treated with 1 µl of analogue (II) solution and were either tested immediately or after a specific period.

Response of male housefly to targets of live, virgin female, 3 days old, before and after treatments were recorded by the number of mating strikes made by five males at the target over a fifteen minute period (each test result in the sum of four replicates). The recorded results are shown in table A - C. Each value in the column Test is the average of four replicates.

| A. Number of strikes made on females before and after treatment of females with 1 µl of hexane, 1 µg of (Z)-9-tricosene (I) in 1 µl hexane, or 1 µl of analogue (II) in 1 µl hexane. Percent reduction of mating shown in brackets. | | | | |
|---|---|---|---|---|
| Test | Before treatment | Hexane | (Z)-9-tricosene | Analogue |
| 1 | 60.5 | 38.25 (39) | 49 (19) | 16.25 (73) |
| 2 | 60.5 | 51.75 (14) | 60 ( 1) | 15.50 (74) |
| 3 | 60.75 | 36.75 (39) | 52 (15) | 7.50 (88) |
| 4 | 62.0 | 37.75 (37) | 56 (16) | 7.25 (88) |

| B. Number of strikes made on females before and after treatment of females with 1 µg of analogue (II) in 1 µl hexane. | | | |
|---|---|---|---|
| Test | Before treatment | Treated with analogue | Percent reduction in mating |
| 1 | 24 | 3 | 82 |
| 2 | 25 | 4 | 86 |
| 3 | 8 | 3 | 67 |
| 4 | 13 | 3 | 80 |
| 5 | 45 | 5 | 90 |
| 6 | 38 | 4 | 92 |
| 7 | 31 | 5 | 85 |

| C. Number of strikes made on female target before and after treatment of males with 1 µg of analogue (II) in 1 µl hexane and then retested 24 hours an 48 hours after recovery of the treatment. | | | | | | | |
|---|---|---|---|---|---|---|---|
| Test | Untreated | Analogue | % reduction | Analogue + 24 h | % reduction | Analogue + 48 h | % reduction |
| 1 | 76 | 1 | 99 | 7 | 90 | - | - |
| 2 | 10 | 0 | 100 | 2 | 80 | - | - |
| 3 | 37 | - | - | - | - | 1.5 | 96 |

These data shows that treatment with hexane, (Z)-9-tricosene (I) and pheromone analogue (II) all reduced the number of mating strikes. When applied to female target (Z)-9-tricosene (I) caused a small, but significant reduction in the number of strikes made by males when compared with their response to untreated females. Treatment with hexane led to a larger reduction. The pheromone analogue (II) reduced the number of strikes by more than 70% (Figures 1 and 2). When the pheromone analogue (II) was applied to male flies there was an even greater reduction in the number of strikes. There is evidence that this effect declined with increasing time after treatment (Figure 3), but even after 24 hours you still have considerable effect.

### Example 2.

### Plutella xylostella L., the diamondback moth.

This example shows the biological activity of (Z)-11-hexadecenal (III), (Z)-11-hexadecenyl acetate (IV) and the cyclopropene analogues, 10-(2-butylcycloprop-1-enyl)decanal (VI) and 10-(2-butylcycloprop-1-enyl)-decanyl acetate (VII) electrophysiologically by an electroantennogram assay, and the effect on courtship behaviour of diamondback moth exposed to a mixture of the cyclopropene pheromone analogues,
10-(2-butylcycloprop-1-enyl)decanal (VI) and 10-(2-butylcycloprop-1-enyl)decanyl acetate (VII), which are the analogues of (Z)-11-hexa- decenal (III) and (Z)-11-hexadecenyl acetate (IV) which are the major components of the sex pheromone of the diamondback moth.

Electroantennograms (EAG's) were recorded from excised heads of *Plutella xylostella* males with Ag/AgCI electrodes. The indifferent electrode (glass capillary, inner diameter=0.86 mm), filled with Beadle Ephrussi Ringer (BER) solution was inserted into the base of the head and the BER-filled recording electrode was brought into contact with the cut end of an antenna. Signals were amplified and recorded by standard methods. The stimulus was delivered into a purified air stream (1 litre/min) that flowed continuously over the preparation using a filter paper in a disposable Pasteur pipette cartridge. The impulse frequency was determined as the number of impulses that were elicited during the first 1 sec after stimulus application. To compensate for antennal fatigue, responses were normalised using a standard stimulus (0.1 g hexen-1-ol) before and after each experimental stimulus. Control values (solvent only) were subtracted from the normalised values to give the final, corrected absolute EAG values. The results for the EAG of (Z)-11-hexadecenal (III) and (Z)-11-hexadecenyl acetate (IV) and for the cyclopropene analogues (VI) and (VII) are shown in Figure 4. The cyclopropene analogues are being detected by the antenna and therefore there is a response, although at a lower level than for (III) and (IV). It is not possible to deduce from this electrophysiology whether the cyclopropenes are acting as inhibitors and binding to the same receptor site as that of the natural pheromones, reversibly or irreversibly. It can be concluded however, that they are acting as analogues to pheromones.

The experiments on courtship behaviour were performed by applying the above stated chemicals in a solvent to a piece of filter paper in a side-arm of a four way olfactometer. The olfactometer (29.5 cm X 29.5 cm X 2.5 cm), a modification of Pettersson olfactometer, was constructed of four perspex crescents forming a four-pointed-star-shape. The males were able to move freely throughout the olfactometer. When the moth remained in one of the four fields. it was recorded as having made a preferential choice. After the first choice was recorded, the time and position of each subsequent change to a different direction and particular movement was recorded. Once they entered the pheromone plume, the amount of time and males exhibited "looking on" behaviour (i.e. circling and wing fanning) was recorded. Few male responses were observed when no treatment was present in any of the arms of the olfactometer. However, if the pheromone was present, the males remained in the treated arm and repeated the mating dance which included circling and wing fanning.

Five 3 day old virgin males were exposed to a variety of chemical treatments applied to filter paper in the bioassay chamber. The responses were divided into the five categories as outlined below :
1) Circling
2) Flying
3) Still
4) Walking
5) Wing-fanning

Four odour fields were created by sucking air out through a removable joint in the centre ceiling of the chamber. This hole was also used to introduce test insects into the chamber. After each experiments the test chamber was thoroughly washed in water with detergent, rinsed with hot water. rinsed again with distilled water, and then dried.

For each set of experiments an initial run was performed in which no chemical was applied to the olfactometer. This ensured that there was no deviation from a random distribution of insects throughout the chamber.

The odour source was provided in one of the side-arms by a piece of filter paper dosed with either solvent, pheromone in solvent or analogue in solvent The chemical treatments included hexane (1µl), a 1:1 mixture of (Z)-11-hexadecenal (III) (0.1 ng) and (Z)-11-hexadecenyl acetate (IV) (0.1 ng) and a 1:1 mixture of
10-(2-butylcycloprop-1-enyl)decanal (VI) (0.1 ng) and 10-(2-butylcycloprop-1-enyl)-decanyl acetate (VII) (0.1ng). The responses to these treatments were then compared with the responses of untreated 3 day old virgin male moths without any chemical present. The tested materials (0.1 ng) were applied to filter paper strips in 1 µl HPLC grade hexane.

A video camera allowed insect behaviour to be recorded with a video cassette recorder. Each test was recorded for 15 minutes and then discontinued. The tapes were analysed at one second intervals.

All experimental data were analysed using a two-way analysis of variance (ANOVA), then by Duncan's multiple-range test when significant differences were found in the ANOVA.

The amount of circling and walking is shown in Figure 5. Figure 5 shows that the greatest amount of circling and walking occurs in the arm treated with the pheromone and this activity was observed continuously throughout the 15 minute experimental period. However, there was a small amount of circling observed in the analogue treated arm and this activity occurred very early in the observation period. Walking was less in the analogue treated arm than in the pheromone treated arm.

As walking is less specifically associated with courtship, wing fanning and circling were chosen as behaviours to indicate a response to pheromone. The effect of treatment with the analogue following a previous treatment with the pheromone is shown in Figure 6. Wing fanning and circling were reduced on addition of the analogues. When synthetic pheromone treated moth were compared to analogue treated moths, significantly more males exhibit circling (P<0.001) and wing fanning (P<0.05) with the pheromone. The wing fanning response reduced by 84% from the pheromone to the analogue. The male initially was attracted to the analogue treated arm and within the first four minutes there was considerable movement which mainly involved walking and very little wing fanning and circling. The moths then either remained still in the analogue source or moved away from it into a different section of the chamber.

Immediate reapplication of the pheromone after the atmosphere had been treated with the analogue provided no restoration of wing fanning or circling behaviour (P>0.05) This effect is illustrated in figure 7 and provides an initial indication that the analogue had been bound to the same receptor site as that of the pheromone. Pheromone was presented in conjunction with the analogue, to observe whether the pheromone would mask the analogue or vice versa and to see if there was an appreciable reduction in male response. The side-arm was initially treated with the solvent hexane. No significant effect with wing fanning and circling (P>0.05) was observed by the males on addition of hexane. The amount of time spent walking did however increase. By comparison with a treatment with a 1:1 pheromone blend of (Z)-11-hexadecenal (III) and (Z)-11-hexadecenyl acetate (IV) in treatment with mixed atmosphere of pheromone and analogue caused significantly fewer males to exhibit circling (P<0.002) but there was no effect on wing fanning (P<0.2). Also, on comparing the treatment of a pheromone and analogue mixture to moths in atmosphere of a analogues, significantly more males exhibit circling (P<0.05) with the pheromone present, but no effect on wing fanning (P<0.44) was observed. Pheromone receptor blocking may have occurred in these case. These results are illustrated in Figure 8.

The olfactometer experiments show that physiological levels of hexane did have a small effect, i.e. increasing the activity of the males, but not as much as with the addition of the sex pheromone. The overall results showed that, the average amount of time spent circling and wing fanning was greatest when the males were in the plume of the synthetic pheromone. This was significantly longer than any of the other treatments. It was found to be substantially less when the analogue was added, and least when no chemical was applied to the filter paper. The cyclopropene analogue had a dramatic effect on decreasing the amount of time spent by the moths on circling and wing fanning.

Field tests, where traps were loaded with either no chemical, pheromone mix, analogue mix or analogue mix and pheromone mix in combination, have been performed. The number of moths were greatest in the pheromone baited lures, and significantly less in all other treatments. Traps loaded with the analogue mix caught very few moths. When pheromone mix and analogue mix were used in combination, trap catch was significantly reduced compared to pheromone loaded traps.

### Example 3.

### Ephestia elutella Hbn, the warehouse moth.

This example shows the biological activity of (Z,E)-9.12-tetradecadienyl acetate (VIII) and the cyclopropene analogue, 8-(2-(E-but-2-en-1-yl)cycloprop-1-enyl)octanyl acetate (X) electro- physiologically by an electroantennogram assay, and the effect on courtship behaviour of warehouse moth exposed to a mixture of the cyclopropene pheromone analogues, 8-(2-(E-but-2- en-1-yl)cycloprop-1-enyl)octanyl acetate (X) and 8-(2-(E-but-2-en-1-yl)cycloprop-1-enyl)octanol (XI), which are the analogues of (Z,E)-9,12-tetradecadienyl acetate (VIII) and (Z,E)-9,12-tetra- decadien-1-ol (IX) which are the sex pheromone of warehouse moth.

Electroantennograms (EAG's) were recorded from excised heads of *Ephestia elutella* males with Ag/AgCI electrodes. The set up was the same as that used for *Plutella xylostella* in example 2. The results for the EAG of (Z,E)-9,12-tetradecadienyl acetate (VIII) and the cyclopropene analogue, 8-(2-(E-but-2-en-1-yl)cycloprop-1-enyl)octanyl acetate (X) are shown in Figure 9. The cyclopropene analogues are being detected by the antenna and therefore there is a response, although at a lower level than for the pheromone. It is not possible to deduce from the electrophysiology whether the cyclopropene are acting as an inhibitor, binding reversibly or irreversibly to the same receptor site as that for the natural pheromones. It can be concluded however, that they are acting as analogues to pheromones.

The experiments on courtship behaviour were performed by applying the above stated chemicals to a piece of filter paper in a side-arm of a four way olfactometer. The same experimental procedure was adopted and the same olfactometer was used throughout this study as described for diamondback moth in example 2. The chemical treatments included the individual major pheromone component, (Z,E)-9,12-tetradecadienyl acetate (VIII) and then a 1:1 mixture of (Z,E)-9,12-tetradecadienyl acetate (VIII) and (Z,E)-9,12-tetradecadien-1-ol (IX) and finally, the cyclopropene analogues 8-(2-(E-but-2-en-1-yl)cycloprop-1-enyl)octan-1-yl (X) acetate and 8-(2-(E-but-2-en-1-yl)cycloprop-1-enyl)octanol (XI). The tested materials (0.1 ng initially, followed by 1 µg) were applied to filter paper strips in 1µl HPLC grade hexane. The responses to these treatments were then compared with the responses of untreated three day old virgin male moths without any chemicals present.

All experimental data were analysed using a two-way analysis of variance (ANOVA), then by Duncan's multiple-range test when significant differences were found in the ANOVA.

As walking is less specifically associated with courtship, wing-fanning and circling were chosen as behaviours to indicate a response to pheromone. The effect of treatment with the analogue following a previous treatment with the pheromone is shown in Figure 10. Wing-fanning and circling were reduced on addition of the analogue. When synthetic pheromone treated moths were compared to analogue treated moths, significantly more males exhibited circling (P<0.001) and wing-fanning (P<0.01) with the pheromone. The wing-fanning response reduced by 96% from the pheromone to the analogue. The male initially was attracted to the analogue treated arm and within the first four minutes there was a great deal of movement which mainly involved walking and very little wing-fanning and circling. The moths then more commonly moved away from it into a different section of the chamber.

Immediate reapplication of the pheromone after the atmosphere had been treated with the analogue provided no restoration of wing-fanning or circling behaviour (P>0.05). This effect is illustrated in Figure 11 and provides an initial indication that the analogue had bound irreversibly to the same receptor site as the pheromone. and saturated the receptors and possibly stopped them firing on the antennae.

The olfactometer experiments show that the average amount of time spent circling and wing-fanning was greatest when the males were in the plume of the synthetic pheromone. This was significantly longer than any of the other treatments. Activity was found to be substantially less when the analogue was added, and at least when no chemical was applied to the filter paper. The cyclopropene analogue had a dramatic effect, decreasing the overall amount of time spent circling and wing-fanning and causing the insects to move away from the analogue plume. However, a time-analysis of the results showed that in the early stages of the experiment the insects were attracted towards the analogue plume and showed considerable short-term activity including wing-fanning and circling. This suggests that the analogue may be binding to and blocking the receptor site.

During the above experiments a solvent was used to place the pheromone analogues in the test chambers. The solvent was used for practical reasons only and did not interfere with the effect of the pheromone itself. When the pheromone analogues are used in practice for controlling insect species they may be mixed with a carrier which can be a gas or solvent. Said carrier shall not interfere with the effect of the pheromone analogue and shall not be environmentally detnmental.

Thus according to the present invention it has been demonstrated that cyclopropene analogues of natural pheromones applied to insects can be useful in controlling the mating behaviour in insects. All the behavioural experiments, with the housefly, the diamondback moth and the warehouse moth, showed that the respective cyclopropenated pheromone analogues had a dramatic effect on the courtship behaviour of the males. The number of mating strikes of the housefly and the circling and wing fanning, which are associated with courtship of diamondback moth and warehouse moth, were decreased significantly. In the case of diamondback moth and warehouse moth the analogues cause a response at the antenna in the EAG studies. When the insects were treated with cyclopropene pheromone analogue and after a while exposed to the natural sex pheromone, the courtship behaviour was dramatically reduced by the first treatment and showed only a small return to normal values after the second treatment. The cyclopropene analogue therefore seem to be targeting the same receptor site as the natural pheromone, and blocking it.

## Claims

1. A cyclopropene analogue of a pheromone in which the analogue is identical to the pheromone except that an alkene group has been replaced by a cyclopropene group having either two hydrogens at the 3-position or one or two substituents other than hydrogen at the 3-position.

2. A cyclopropene analogue according to Claim 1, which is a cyclopropene analogue of a long chain aliphatic pheromone having one or two carbon-carbon double bonds.

3. A cyclopropene analogue according to Claim 1 or Claim 2, where a Z- or cis-alkene group of said pheromone is replaced by a cyclopropene group.

4. A cyclopropene analogue according to any preceding claim, wherein the cyclopropene analogue is an analogue of a sex pheromone.

5. A cyclopropene analogue according to any preceding claim, of the formula: 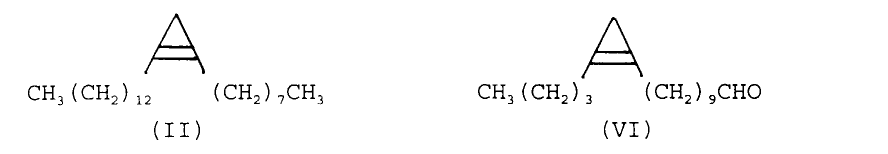 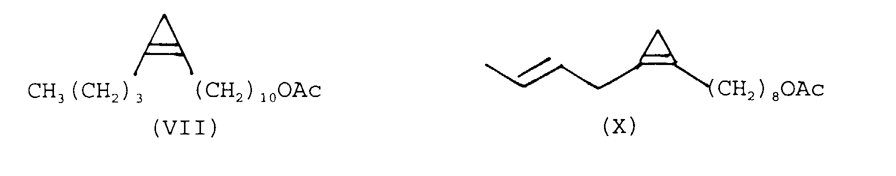 or

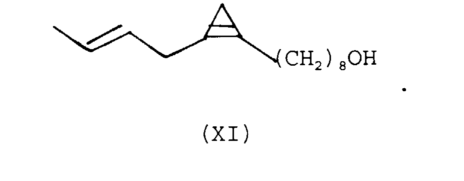

6. A mixture of analogues of pheromones, which comprises at least one cyclopropene analogue of a pheromone according to any preceding claim.

7. A mixture according to Claim 6, wherein the cyclopropene analogue is 1-octyl-2-tridecylcyclopropene.

8. A mixture according to Claim 6, wherein the mixture comprises 10-(2-butylcycloprop-1-enyl)decanal and 10-(2-butylcycloprop-1-enyl)decanyl acetate.

9. A mixture according to Claim 6, wherein the mixture comprises 8-(2-(E-but-2-en-1-yl) -cycloprop-1-enyl)octanyl acetate and 8-(2-(E-but-2-en-1-yl) -cycloprop-1-enyl)octanol.

10. Use of an analogue of a pheromone to control an insect species, wherein the analogue is identical to a pheromone which is recognized by said insect species except that an alkene group has been replaced by a cyclopropene group having either two hydrogens at the 3-position or one or two substituents other than hydrogen at the 3-position.

11. Method for controlling an insect species, wherein a pheromone analogue which is identical to a pheromone which is recognized by said insect species except that an alkene group has been replaced by a cycloprene group having either two hydrogens at the 3-position or one or two substituents other than hydrogen at the 3-position, or a mixture of such analogues, is applied on said insect species.

12. Method according to Claim 11, wherein said pheromone recognized by said insect species is a sex pheromone and wherein said pheromone analogue, or mixture of pheromone analogues, is applied to change the mating behaviour of said insect species.

13. Method according to Claim 12, wherein the insect *Musca domestica L.,* the housefly, is controlled by applying 1-octyl-2-tridecycyclopropene.

14. Method according to Claim 12, wherein the insect *Plutella xylostella L.,* the diamondback moth, is controlled by applying a mixture of 10-(2-butylcycloprop-1-enyl)decanal and 10-(2-butylcycloprop-1-enyl)decanyl acetate.

15. Method according to Claim 12, wherein the insect *Ephestia elutella* Hbn, the warehouse moth, is controlled by applying a mixture of 8-(2-(E-but-2-en-1-yl)-cycloprop-1-enyl)octanyl acetate and 8-(2-(E-but-2-en-l-yl)-cycloprop-1-enyl)octanol.

16. Method according to any one of Claims 11 - 15, wherein said pheromone analogue, or mixture of pheromone analogues, is applied distributed in a carrier.

## Patentansprüche

1. Cyclopropenanaloge Verbindung eines Pheromons, bei der die analoge Verbindung mit dem Pheromon mit dem Unterschied identisch ist, daß eine Alkengruppe durch eine Cyclopropengruppe mit entweder zwei Wasserstoffen in der 3-Position oder einem oder zwei Substituenten abweichend von Wasserstoff in der 3-Position ersetzt ist.

2. Cyclopropenanaloge Verbindung nach Anspruch 1, die eine cyclopropenanaloge Verbindung eines langkettigen aliphatischen Pheromons mit einer oder zwei Kohlenstoff-Kohlenstoff Doppelbindungen ist.

3. Cyclopropenanalogeverbindung nach Anspruch 1 oder 2, wobei eine Z- oder cis-Alkengruppe des Pheromons durch eine Cyclopropengruppe ersetzt ist.

4. Cyclopropenanaloge Verbindung nach einem der vorhergehenden Ansprüche, wobei die cyclopropenanaloge Verbindung ein Analog eines Sexpheromons ist.

5. Cyclopropenanaloge Verbindung nach einem der vorhergehenden Ansprüche der Formel: 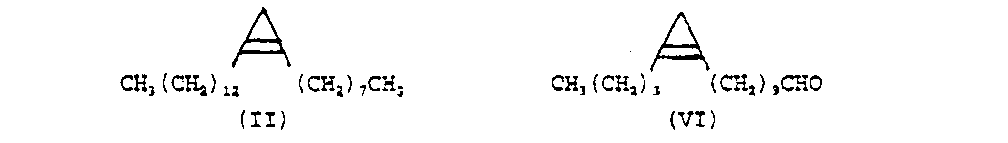 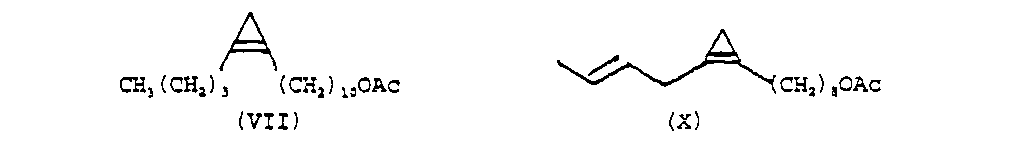 or

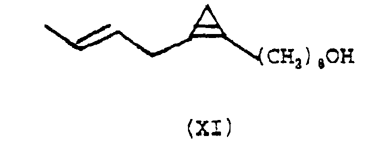

6. Mischung von Analogen von Pheromonen, die mindestens eine cyclopropenanaloge Verbindung eines Pheromons gemäß einem der vorhergehenden Ansprüche aufweist.

7. Mischung nach Anspruch 6, wobei die cyclopropenanaloge Verbindung 1-Octyl-2-tridecylcyclopropen ist.

8. Mischung nach Anspruch 6, wobei die Mischung 10-(2-Butylcycloprop-1-enyl)decanal und 10-(2-Butylcyloprop-1-enyl)decanyl Acetat enthält.

9. Mischung nach Anpruch 6, wobei die Mischung 8-(2-(E-but-2-en-1-yl)-cycloprop-1-enyl)octanylacetat und 8-(2-(E-but-2-en-1-yl)-cycloprop-1-enyl)octanol enthält.

10. Verwendung eines Analogs eines Pheromons zur Regelung einer Insektenspezie, wobei das Analoge mit einem Pheromon, das von der Insektenspezie erkannt wird, mit dem Unterschied identisch ist, daß eine Alkengruppe durch eine Cyclopropengruppe, die entweder zwei Wasserstoffe in der 3-Position oder ein oder zwei Substituenten abweichend von Wasserstoff in der 3-Position aufweist, ersetzt ist.

11. Verfahren zur Regelung eine Insektenspezie, wobei ein Pheromonanaloge das mit einem Pheromon, das von der Insektenspezie erkannt wird, mit dem Unterschied identisch ist, daß eine Alkengruppe durch eine Cycloprengruppe mit entweder zwei Wasserstoffen in der 3-Position oder einen oder zwei Substituenten abweichend von Wasserstoff in der 3-Position ersetzt ist, oder eine Mischung solcher Analogen-verbindungen auf die Insektenspezie angewendet wird.

12. Verfahren nach Anspruch 11, wobei das Pheromon, daß durch die Insektenspezie erkannt wird, ein Sexpheromon ist, und wobei das Pheromonanaloge oder eine Mischung der Pheromonanalogen angewendet wird, um das Paarungsverhalten der Insektenspezie zu verändern.

13. Verfahren nach Anspruch 12, wobei das Insekt Muska domestika L., die Hausfliege, durch Anwendung von 1-Octyl-2-tridecylcyclopropen geregelt bzw. kontroliert wird.

14. Verfahren nach Anspruch 12, wobei das Insekt Plutella xylostella L., die Diamantrückenmotte, durch Anwendung einer Mischung von 10-(2-Butylcycloprop-1-enyl)decanal und 10-(2-Butylcycloprop-1-enyl)decanylacetat geregelt bzw. kontroliert wird.

15. Verfahren nach Anspruch 12, wobei das Insekt Ephestia elutella Hbn, die Warenlagermotte, durch Anwendung einer Mischung von 8-(2-(E-but-2-en-1-yl)-cycloprop-1-enyl)-octanylacetat und 8-(2-(E-but-2-en-1-yl)-cycloprop-1-enyl)-octanol geregelt bzw. kontroliert wird.

16. Verfahren nach einem der Ansprüche 11 bis 15, wobei das Pheromonanaloge oder die Mischung von Pheromonanalogen in einem Träger verteilt angewendet wird.

## Revendications

1. Analogue cyclopropénique d'une phéromone dans lequel l'analogue est identique à la phéromone excepté qu'un groupe alcène a été remplacé par un groupe cyclopropène ayant soit deux hydrogènes en position 3 soit un ou deux substituants autres que l'hydrogène en position 3.

2. Analogue cyclopropénique selon la revendication 1, qui est un analogue cyclopropénique d'une phéromone aliphatique à chaîne longue ayant une ou deux doubles liaisons carbone-carbone.

3. Analogue cyclopropénique selon la revendication 1 ou la revendication 2, dans lequel un groupe alcène en Z ou en cis de ladite phéromone est remplacé par un groupe cyclopropène.

4. Analogue cyclopropénique selon l'une quelconque de s revendications précédentes, dans lequel l'analogue cyclopropénique est un analogue d'une phéromone sexuelle.

5. Analogue cyclopropénique selon l'une quelconque des revendications précédentes, ayant la formule : 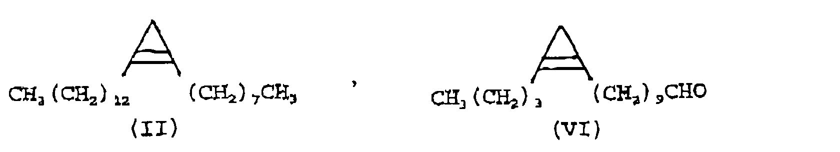 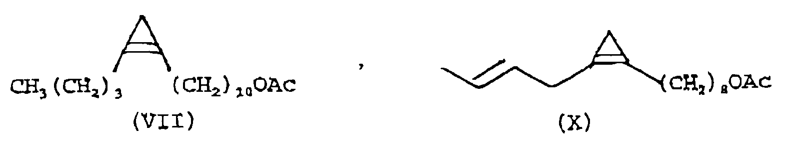 ou

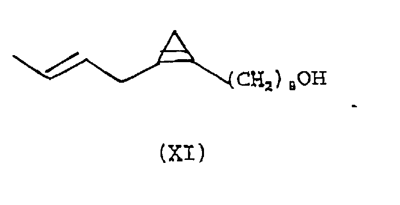

6. Mélange d'analogues de phéromones, qui comprend au moins un analogue cyclopropénique d'une phéromone selon l'une quelconque des revendications précédentes.

7. Mélange selon la revendication 6, dans lequel l'analogue cyclopropénique est le 1-octyl-2-tridécylcyclopropène.

8. Mélange selon la revendication 6, dans lequel le mélange comprend le 10-(2-butylcycloprop-1-ényl)décanal et l'acétate de 10-(2-butylcycloprop-1-ényl)décanyle.

9. Mélange selon la revendication 6, dans lequel l'acétate de 8-(2-(E-but-2-èn-1-yl)cycloprop-1-ényl)octanyle et le 8-(2-(E-but-2-èn-1-yl)cycloprop-1-ényl)octanol sont présents.

10. Utilisation d'un analogue d'une phéromone pour contrôler une espèce d'insecte, dans laquelle l'analogue est identique à la phéromone qui est reconnue par ladite espèce d'insecte excepté qu'un groupe alcène a été remplacé par un groupe cyclopropène ayant soit deux hydrogènes en position 3 soit un ou deux substituants autres que l'hydrogène en position 3.

11. Procédé de contrôle d'une espèce d'insecte, dans lequel un analogue d'une phéromone qui est identique à la phéromone qui est reconnue par ladite espèce d'insecte excepté qu'un groupe alcène a été remplacé par un groupe cyclopropène ayant soit deux hydrogènes en position 3 soit un ou deux substituants autres que l'hydrogène en position 3, ou un mélange de tels analogues, est appliqué à ladite espèce d'insecte.

12. Procédé selon la revendication 11, dans lequel ladite phéromone reconnue par ladite espèce d'insecte est une phéromone sexuelle et dans lequel ledit analogue de la phéromone, ou mélange d'analogues de phéromones, est utilisé pour modifier le comportement d'accouplement de ladite espèce d'insecte.

13. Procédé selon la revendication 12, dans lequel l'insecte *Musca domestica* L., la mouche domestique, est contrôlé par application de 1-octyl-2-tridécylcyclopropène.

14. Procédé selon la revendication 12, dans lequel l'insecte *Plutella xylostella* L., ou fausse teigne des crucifères, est contrôlé par application d'un mélange de 10-(2-butylcycloprop-1-ényl)décanal et d'acétate de 10-(2-butylcycloprop-1-ényl)décanyle.

15. Procédé selon la revendication 12, dans lequel l'insecte *Ephestia elutella* Hbn, ou pyrale du tabac, est contrôlé par application d'un mélange d'acétate de 8-(2-(E-but-2-èn-1-yl)cycloprop-1-ényl)octanyle et de 8-(2-(E-but-2-èn-1-yl)cycloprop-1-ényl)octanol.

16. Procédé selon l'une quelconque des revendications 11-15, dans lequel ledit analogue de phéromone, ou mélange d'analogues de phéromones, est appliqué par distribution avec un vecteur.
